# EUROPÄISCHE PATENTANMELDUNG

(11) **EP 1 902 980 A1**
(43) Veröffentlichungstag der Anmeldung: **26.03.2008**
(21) Anmeldenummer: 07016326.6
(22) Anmeldetag: 21.08.2007
(51) Int. Cl.: B65G 47/82, B65G 47/90, B65B 35/20, B65B 35/40

(54) **Reversierende Vorschubeinrichtung zum taktweisen linearen Vorschieben von Gutstapeln über eine Transportstrecke**

(30) Priorität: 21.09.2006 DE 102006045107
(71) Anmelder: OPTIMA filling and packaging machines GmbH, 74523 Schwäbisch Hall (DE)
(72) Erfinder: Rothbauer, Andreas, 74538 Rosengarten (DE)
(74) Vertreter: Hübner, Gerd

(57) **Zusammenfassung**

Eine reversierende Vorschubeinrichtung zum taktweisen linearen Vorschieben von Gutstapeln über eine Transportstrecke weist einen doppelarmigen rotierbaren Vorschubhebel mit zwei taktweise arbeitenden Schiebern 10 auf. Vorschubhebel 6 und Schieber 10 werden durch eine Vierfach-Achsen-Anordnung mit einer Linearachse 11, Rotationsachse 16, Drehachse 17 für die über Lenker 8 angebundenen Schieber 10 und eine Rückschwenkachse gesteuert angetrieben.

## Beschreibung

Die Erfindung betrifft eine reversierende Vorschubeinrichtung zum taktweisen linearen Vorschieben von Gutstapeln über eine Transportstrecke.

Zum Hintergrund der Erfindung ist festzuhalten, dass auf einer breiten Palette von technischen Gebieten die Problematik des Handlings von Gutstapeln besteht. Als ein Beispiel sei das Gebiet der Verpackungstechnik genannt, bei dem Produkte beispielsweise kontinuierlich von einer Produktionslinie her antransportiert, zu Stapeln mit einer Produktanzahl entsprechend einer Verpackungsgröße gruppiert und anschließend zu einer Verpackungslinie verbracht werden müssen. Die Problematik des taktweisen linearen Vorschiebens von Gutstapeln über eine Transportstrecke tritt dabei regelmäßig auf.

Das Stapel-Handling kann durch die Eigenschaften des Produktes dabei erheblich erschwert werden. Stapelformat und -höhe, Produktformat, -oberflächenbeschaffenheit und -eigenstabilität sind Einflussgrößen, die im Zusammenspiel miteinander die Handlingeigenschaften des Gutstapels bestimmen.

Als ein Beispiel sei eine Verpackungslinie in der Hygieneindustrie genannt, wo beispielsweise Slipeinlagen oder Damenbinden zu Stapeln gruppiert und in der Verpackungslinie mehrfach über Transportstrecken von Verpackungsstation zu Verpackungsstation als lose Gutstapel linear verschoben werden müssen. Es ist offensichtlich, dass derartige Hygieneprodukte aufgrund ihrer Weichheit und relativ unregelmäßig geformten Oberfläche nur einen äußerst labilen Stapel bilden. Nichtsdestotrotz soll eine solche Vorschubeinrichtung einen schnellen Vorschub bei schonender Stapelbehandlung gewährleisten.

Davon ausgehend liegt der Erfindung die Aufgabe zugrunde, eine reversierende Vorschubeinrichtung zum taktweisen linearen Vorschieben von Gutstapeln über eine Transportstrecke anzugeben, die eine hohe Taktrate bei schonender Stapelbehandlung ermöglicht. Diese Aufgabe wird durch eine Vorschubeinrichtung mit den im Kennzeichnungsteil des Patentanspruches 1 angegebenen Merkmalen gelöst. Demnach umfasst die Vorschubeinrichtung
- einen doppelarmigen, in einer zur Transportstrecke parallelen Rotationsebene rotierbaren Vorschubhebel, an dessen beiden Enden Schieber jeweils über einen Lenker in einer zur Rotationsebene des Vorschubhebels parallelen Ebene drehbar angetrieben gelagert sind, wobei die Schieber jeweils abwechselnd mit einem Gutstapel in Eingriff bringbar sind,
- eine Vierfach-Achsen-Anordnung zur Lagerung und zum gesteuerten, überlagerten Rotations-, Linear- und Drehantrieb des Vorschubhebels und seiner Lenker mit
   = einer mit konstanter Winkelgeschwindigkeit rotativ angetriebenen, horizontal und quer zur Transportstrecke außerhalb davon angeordneten Rotationsachse,
   = einer reversierend linear angetriebenen, mit der Rotationsachse gekoppelten Linearachse, die in einer zur Rotationsebene parallelen Ebene in einem Winkel auf das Ende der Transportstrecke zu geneigt angeordnet ist,
   = einer Drehachse zum Drehantrieb der Lenker relativ zum Vorschubhebel, und
   = einer darin integrierten Rückschwenkachse für die Lenker der Schieber, sowie
- eine Bewegungssteuerung des Vorschubhebels und seiner Lenker mittels der Vierfach-Achsen-Anordnung derart, dass
   = ausgehend von einer Übernahmeposition eines der beiden Schieber in einem Transporthub unter Überlagerung einer Rotationsbewegung der Rotationsachse, einer Linearbewegung der Linearachse auf die Transportstrecke zu und einer Drehbewegung des zugeordneten Lenkers der Schieber den Gutstapel von der Übemahmeposition linear entlang der Transportstrecke n Ausgabeposition des Gutstapels am Ende der Transportstrecke verschiebt,
   = dort durch Aktivierung der Rückschwenkachse bei Weiterdrehung des Vorschubhebels dieser Schieber durch eine begrenzte, reversierende Rückschwenkbewegung des Lenkers rückwärts vom Gutstapel abgehoben und hinter diesem von der Transportstrecke weg geführt wird, und
   = anschließend der Schieber in einem Rückhub unter Überlagerung einer weiteren Rotationsbewegung der Rotationsachse, einer rückführender Linearbewegung der Linearachse weg von der Transportstrecke und einer weiterer Drehbewegung des Lenkers auf der der Transportstrecke abgewandten Seite der Rotationsachse zurückgeführt und von hinten auf die Transportstrecke zu wieder in die Übernahmeposition für den jeweils übernächsten Gutstapel eingeschwenkt wird, sowie
   = der andere Schieber den vorstehenden Zyklus um 180° phasenversetzt zum einen Schieber unter Transport des jeweils nächsten Gutstapels vollführt.

Aufgrund der vorstehenden Auslegung der erfindungsgemäßen Vorschubeinrichtung kann aufgrund der zweifach vorhandenen, wechselweise in Eingriff mit einem Gutstapel bringbaren Schieber eine hohe Taktrate erzielt werden. Der Einsatz zweier Schieber ist dabei durch die Entkopplung der Transporthub- und Rückhub-Strecken möglich.

Die Antriebsorgane für den Vorschubhebel und seine Lenker sind als Vierfach-Achsen-Anordnung ausgelegt, wobei der Begriff "Achse" im Sinne der Robotertechnik als angetriebener Freiheitsgrad einer Maschinenkomponente zu verstehen ist.

Die an der Anordnung beteiligte Rotationsachse ist dabei in antriebstechnisch einfacher Weise mit konstanter Winkelgeschwindigkeit bewegt, wodurch ein bezüglich der Massenträgheitsmomente gut beherrschbarer gleichmäßiger Umlauf des Vorschubhebels realisiert wird. Dieser ist lediglich von der reversierenden Bewegung aufgrund der Linearachse überlagert.

Durch die auf die Transportstrecke zugeneigte Linearachse wird die bei der überlagerten Rotationsbewegung des Vorschubhebels hervorgerufenen zunehmende Distanzierung des Schiebers von der Transportstrecke durch eine gleichlaufende Annäherung an die Transportstrecke wieder ausgeglichen. Insoweit kann der lineare Vorschubweg entlang der Transportstrecke erzielt werden.

Die integrierte Rückschwenkachse für die Lenker der Schieber führt dazu, dass sich der Schieber am Ende der Transportstrecke nicht einfach in seitlicher Richtung von der Transportstrecke wegzieht. Dies würde dazu führen, dass beim Handling sehr leichter Produkte mit wenig glatter oder weicher Oberfläche die Gefahr besteht, dass die Produkte mitgerissen und der Stapel dadurch zerstört wird. Dies vermeidet die begrenzte, reversierende Rückschwenkbewegung der Lenker aufgrund der integrierten Rückschwenkachse.

Die Kopplung und Überlagerung von Rotations- und Linearachse kann so gestaltet sein, dass an einer stationären Rotationsachse die Linearachse rotierend montiert ist. Ein gewisses Problem liegt bei dieser Variante in den relativ großen zu bewegenden Massen sowohl der Rotations- als auch der Linearachse.

Aus den vorstehenden Gründen ist eine Linearachse mit einer stationär zur Transportstrecke angeordnete Linearführung mit einem verschiebbar daran gelagerten Linearschlitten eine bevorzugte Ausführungsform.

Gemäß weiterer bevorzugter Ausführungsformen ist die Linearachse durch einen Linearmotor gebildet und die Rotationsachse an ihr verschiebbar angeordnet. Vorzugsweise sitzt die Rotationsachse mit ihrem Rotationsantrieb auf dem oben genannten Linearschlitten.

Durch die erfindungsgemäß ebenfalls vorgesehen Drehachse der Lenker um die Vorschubhebelenden wird gewährleistet, dass die Lenker - bis auf die kurze Rückschwenkbewegung am Ende der Transportstrecke - immer in einer gleichbleibenden Ausrichtung zur Transportstrecke im Raum stehen. Grundsätzlich kann für die Drehachsen der Lenker jeweils ein eigener Motor in den Vorschubhebel integriert sein, was jedoch maschinentechnisch einen erhöhten Aufwand bedeuten würde. Insoweit ist zur Vermeidung dieser Problematik in einer bevorzugten Ausführungsform vorgesehen, dass der Antrieb der Drehachsen der Lenker von der Rotationsachse abgeleitet ist. Dazu können die Drehachsen der Lenker gemeinsam über einen umlaufenden Ketten- oder Zahnriementrieb an ein während des Transport- und Rückhubes gegenüber der Rotationsachse stillstehendes, koaxiales Zentralritzel angekoppelt sein. Näheres hierzu ergibt sich aus der Beschreibung des Ausführungsbeispiels.

Auch die Rückschwenkbewegung der Lenker könnte durch eine entsprechende Steuerung der oben erwähnten eigenständigen Drehantriebe der Lenker hervorgerufen werden. Bei einem von der Rotationsachse abgeleiteten Drehantrieb der Drehachsen der Lenker ist zur Erzeugung der Rückschwenkbewegung wiederum das an sich stationäre Zentralritzel heranzuziehen, das in einer bevorzugten Ausführungsform schwenkbar gelagert und reversierend antreibbar ist. Insoweit hat das Zentralritzel eine Mehrfachfunktion, indem darüber sowohl der Drehantrieb der Lenker als auch deren Rückschwenkbewegung erzeugbar ist.

Für diese Rückschwenkbewegung sind wiederum verschiedenen Antriebsalternativen denkbar, so beispielsweise ein Nockenantrieb, ein gesonderter Servomotor oder ein Pneumatikantrieb.

Weitere Merkmale, Einzelheiten und Vorteile der Erfindung ergeben sich aus der nachfolgenden Beschreibung, in der ein Ausführungsbeispiel anhand der beigefügten Zeichnungen näher erläutert wird. Es zeigen:
- Fig. 1 bis 5: Frontansichten der Vorschubeinrichtung mit Transportstrecke in aufeinander folgenden Positionen,
- Fig. 6: eine Frontansicht des rotierbaren Vorschubhebels mit in seinem Innenraum angeordneten Maschinenkomponenten,
- Fig. 7: einen Schnitt durch den Vorschubhebel mit Rotationsantrieb entlang der Schnittlinie A-A nach Fig. 6,
- Fig. 8: eine Rückansicht des Rotationsantriebes des Vorschubhebels mit einer Rückschwenkeinrichtung für dessen Lenker in Form einer Nockensteuerung,
- Fig. 9: einen Schnitt entlang der Schnittlinie A-A nach Fig. 8,
- Fig. 10: eine perspektivische Darstellung des Bauteils gemäß Fig. 8,
- Fig. 11: eine Rückansicht des Linearantriebs mit rotierend angetriebenem Vorschubhebel mit einer Rückschwenkeinrichtung in Form eines Pneumatikantriebes und
- Fig. 12: eine Stirnseitenansicht des zentralen Teils des Vorschubhebels mit Rotationsantrieb und einer Rückschwenkeinrichtung in Form eines Servomotors.

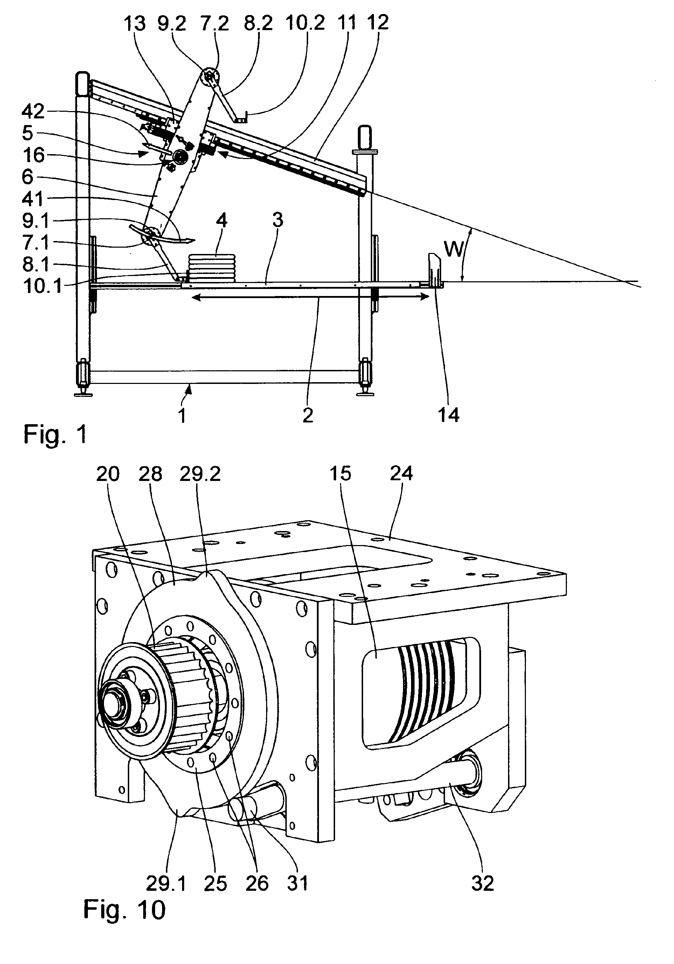

Der grundsätzlich Aufbau der reversierenden Vorschubeinrichtung erschließt sich aus den Fig. 1 bis 5. An einem Maschinengestell 1 ist eine Transportstrecke 2 in Form einer horizontalen Schiebebahn 3 angelegt, die durch - in der Zeichnung aus Gründen der Übersichtlichkeit weggelassene - vertikale Seitenwände begrenzt ist. Die Vorschubeinrichtung ist Teil einer Verpackungslinie, innerhalb derer ein Gutstapel 4 von beispielsweise Damenbinden über die Transportstrecke 2 taktweise linear vorgeschoben werden soll.

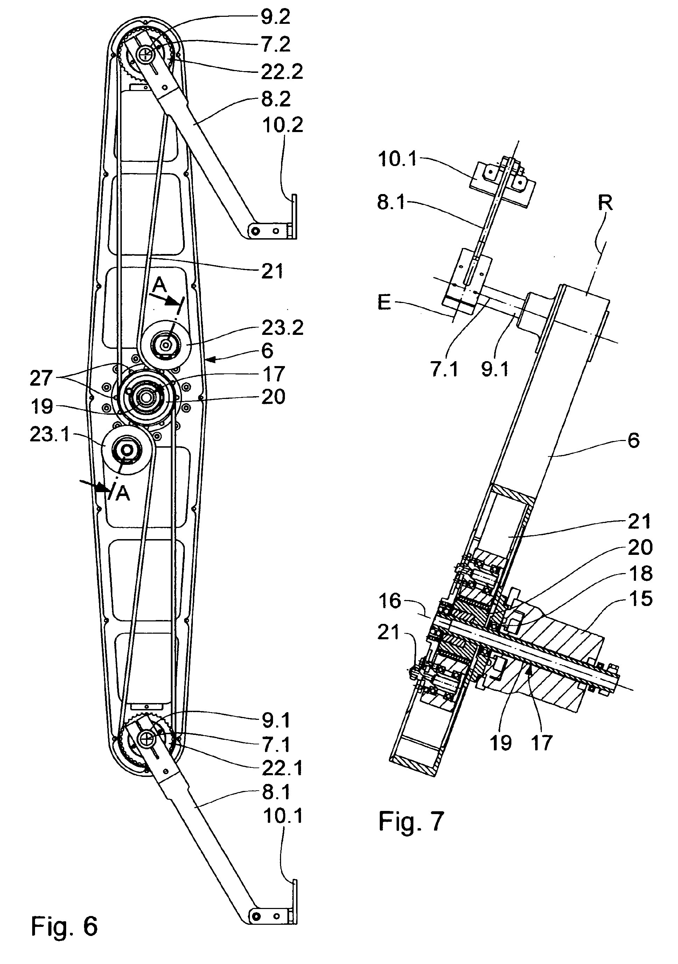

Die eigentliche Vorschubeinrichtung 5 weist als zentrales Teil einen doppelarmigen, in einer zur Transportstrecke 2 parallelen Rotationsebene R (siehe Fig. 7) rotierbaren Vorschubhebel 6 auf, an dessen beiden Enden in Drehachsen 7.1, 7.2 jeweils Lenker 8.1, 8.2 drehbar angetrieben gelagert sind. Die Lenker 8.1, 8.2 sind in einer zur Rotationsebene R parallelen Drehebene E auf Wellen 9.1, 9.2 montiert dazu. An den freien Enden der Lenker 8.1, 8.2 sind jeweils Schieber 10.1, 10.2 montiert, die jeweils abwechselnd mit einem Gutstapel 4 in Eingriff bringbar sind.

Der Vorschubhebel 6 ist mit einer Vierfach-Achsen-Anordnung gelagert und mit einem gesteuerten, überlagerten Rotations-, Linear- und Drehantrieb versehen. So ist am Maschinengestell 1 zum ersten eine als ganzes mit 11 bezeichnete Linearachse in Form eines Linearmotors angeordnet, der aus einer stationären Linearführung 12 und einem verschiebbar angetrieben daran gelagerten Linearschlitten 13 gebildet ist. Die Linearführung 12 ist dabei in einer zur Rotationsebene R parallelen Ebene in einem Winkel W auf das die Ausgabeposition des Gutstapels 4 markierende Ende 14 der Transportstrecke 2 zugeneigt.

Zum zweiten ist auf dem Linearschlitten 13 ein Elektromotor 15 als Rotationsachse 16 zum konstanten Drehantrieb des Vorschubhebels 6 montiert. Die Abtriebswelle des Elektromotors 15 ist in nicht näher dargestellter Weise mit dem rotierbar auf der Rotationsachse 16 gelagerten Vorschubhebel 6 verbunden und treibt diesen mit konstanter Winkelgeschwindigkeit an.

Anhand von Fig. 6 und 7 ist der von der Rotationsachse 16 abgeleitete Drehantrieb der Drehachsen 7.1, 7.2 für die Lenker 8.1, 8.2 zu erläutern. Wie aus Fig. 7 deutlich wird, ist zum einen der Vorschubhebel 6 zentral an die Abtriebswelle 18 des in nicht näher dargestellter Weise auf dem Linearschlitten 13 montierten Elektromotors 15 gekoppelt. Ferner ist eine koaxial in der Abtriebswelle 18 sitzende Welle 19 vorgesehen, auf die innerhalb des Vorschubhebels 6 ein Zentralritzel 20 aufgesetzt ist. Die Welle 19 mit Zentralritzel 20 ist zwar schwenkbar im Elektromotor 15 gelagert, wird jedoch - bis auf die noch näher zu beschreibende Rückschwenkbewegung - stationär gehalten.

Das Zentralritzel 20 steht - wie Fig. 6 deutlich macht - mit einem Zahnriemen 21 in Eingriff, der über jeweils ein Zahnrad 22.1, 22.2 in der Drehachse 7.1, 7.2 der Lenker 8.1, 8.2 geführt ist. Diese Zahnräder 22.1, 22.2 tragen die Wellen 9.1, 9.2 der Lenker 8.1, 8.2 und haben gleiche Zähneanzahl wie das Zentralritzel 20. Der Eingriff des Zahnriemens 21 mit dem Zentralritzel 20 ist durch zwei diametral gegenüberliegende, flankierende Führungsrollen 23.1, 23.2 unterstützt und gesichert. Aufgrund der vorstehenden Konstruktion wird bei einer Rotation des Vorschubhebels 6 mit Hilfe des Elektromotors 15 aufgrund der damit verbundenen Abwälzbewegung des Zahnriemens 21 auf dem stillstehenden Zentralritzel 20 der Zahnriemen 21 in eine Umlaufbewegung gebracht, die wiederum die Zahnräder 22.1, 22.2 relativ zum Vorschubhebel 6 so dreht, dass die Lenker 8.1, 8.2 unabhängig von der Rotationsposition des Vorschubhebels 6 immer - wie gesagt mit Ausnahme der noch zu erläuternden Rückschwenkbewegung - in einer konstanten Ausrichtung in einem bestimmten Winkel zur Transportstrecke 2 bleiben. Die Abfolge der Fig. 1 bis 5 macht dies deutlich.

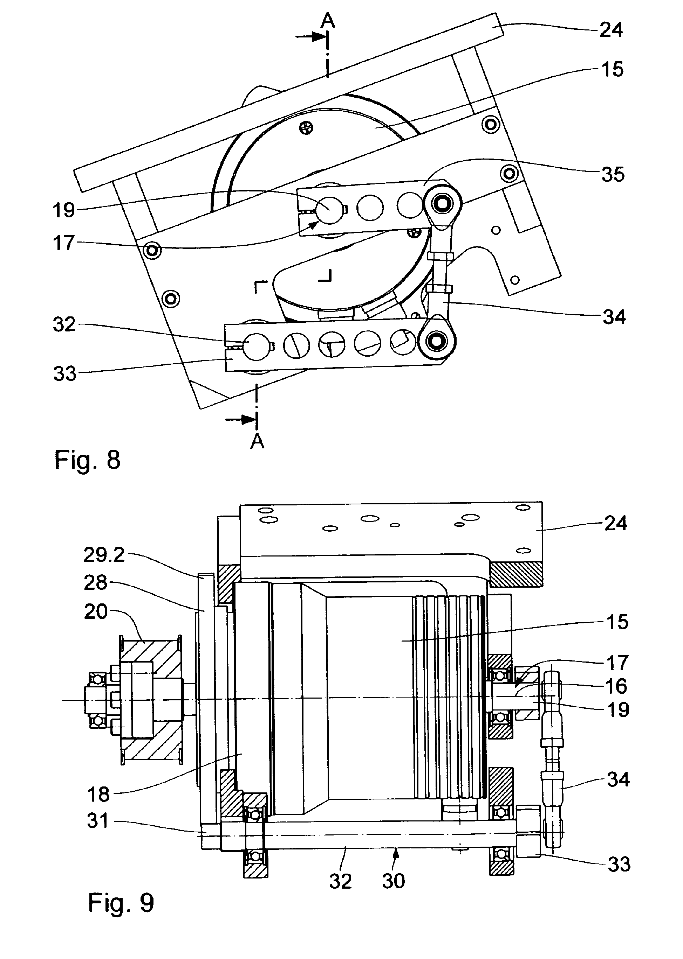

Die Fig. 8 bis 10 machen eine erste Variante für die mehrfach erwähnte, die Rückschwenkachse 17 definierende Rückschwenkbewegung der Lenker 8.1, 8.2 deutlich. So ist in Fig. 8 der stationäre Teil der Rotationsachse 16 mit Lagerkonstruktion 24, Elektromotor 15 und Zentralritzel 20 dargestellt. Der drehbare Vorschubhebel 6 ist der Übersichtlichkeit halber weggelassen, erkennbar ist in Fig. 8 jedoch ein Ringflansch 25, dessen angedeutete Befestigungsbohrungen 26 die in Fig. 6 erkennbaren Halterungsschrauben 27 für den Vorschubhebel aufnehmen. Mit dem Ringflansch 25 ist drehfest eine Nockenscheibe 28 verbunden, die zwei diametral gegenüberliegende Steuernocken 29.1, 29.2 aufweist. Dieser Nockenantrieb ist mit einer Kniehebelkonstruktion 30 gekoppelt, die einen von den Steuernocken 29 auslenkbaren Anschlag 31 und damit gekoppelte Übertragungshebel 32, 33 und 34 aufweist. Diese wirken auf einen mit der Welle 19 gekoppelten Kniehebel 35 derart, dass durch eine Auslenkung des Anschlags 31 durch einen der Steuernocken 29 die Welle 19 des Zentralritzels 20 reversibel über einen kurzen Schwenkwinkel ausgelenkt wird. Mit dieser Schwenkachse 17 wird der gleichmäßige Drehantrieb der Lenker 8.1, 8.2 durch die reversierende Bewegung des Zentralritzels 20 kurz unterbrochen und - wie im folgenden noch näher ausgeführt wird - in eine kurze Rückschwenkbewegung der Lenker 8 umgesetzt.

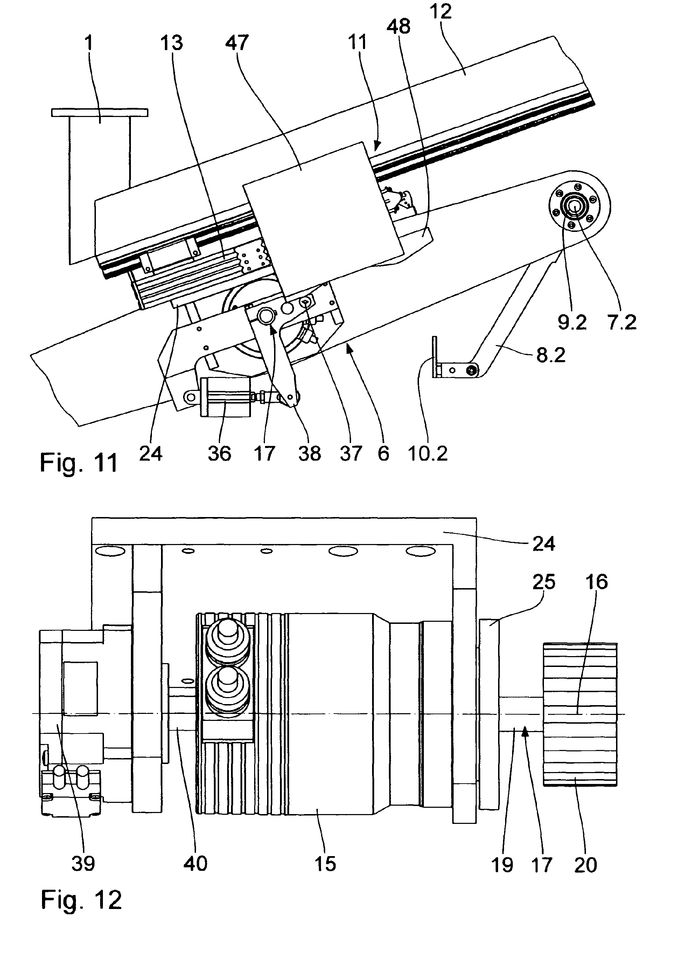

In Fig. 11 ist eine Nockensteuerung für die Rückschwenkbewegung der Lenker 8.1, 8.2 über das Zentralritzel 20 dargestellt, die von der Linearachse 11 abgeleitet wird. Dazu ist an der Linearführung 12 am unteren Ende ein Halter 47 für eine Nockenkulisse 48 angeordnet, die mit einer Tastrolle 37 am einen Schenkel eines L-förmigen Schwenkhebels 38 kooperiert. Der Schwenkhebel 38 ist starr mit der Welle 19 für das Zentralritzel 20 gekoppelt und entgegen dem Uhrzeigersinn durch eine am anderen Arm des Schwenkhebels 38 angreifende Gasfeder 36 beaufschlagt. Sobald der Linearschlitten 13 am Ende seiner Bewegung entlang der Linearführung 12 entlang der Nockenkulisse 48 fährt, lenkt diese den Schwenkhebel 38 über die Tastrolle 37 aus und verschwenkt aufgrund der Wellung der Nockenkulisse 48 das Zentralritzel 20 reversierend um einen kleinen Winkelbetrag.

Die Beaufschlagungskraft der Gasfeder 36 kann gleichzeitig als Überwachungseinrichtung für ein Anschlagen der Schieber 10.1, 10.2 an ein Hindernis verwendet werden. Durch eine solche Hemmung der Schieber 10.1, 10.2 wird auf das Zentralritzel 20 ein Drehmoment über den Zahnriemen 21 erzeugt, das zu einer Auslenkung des Schwenkhebels 38 gegen die Beaufschlagung der Gasfeder 36 führt. Diese Auslenkung wird mit Hilfe eines nicht näher dargestellten Tastschalters erfasst und der Vorschub dann entsprechend unterbrochen. Bei Erreichen der Nockenkulisse 48 wird das Signal des Tastschalters von der Maschinensteuerung ausgeblendet, da hier eine Auslenkung des Schwenkhebels 38 beabsichtigt ist.

Fig. 12 zeigt eine weitere Alternative für die Schwenkachse 17 des Zentralritzels 20, nämlich ein an die Lagerkonstruktion 24 angeflanschter Servomotor 39, dessen Abtriebswelle 40 mit der Welle 19 gekoppelt ist. Mit Hilfe des Servomotors 39 kann dadurch die Welle 19 und damit das Zentralritzel 20 zum korrekten Zeitpunkt kurz und begrenzt reversierend verschwenkt werden.

Als weitere Alternative für die Steuerung des Zentralritzels 20 kann auch ein an der Lagerkonstruktion 24 angeordneter Pneumatikzylinder (nicht dargestellt) vorgesehen sein, dessen Kolbenstange wiederum mit der Welle 19 des Zentralritzels über einen Kniehebel gekoppelt ist. Durch einen kurzen reversierenden Hub der Kolbenstange wird die Welle 19 über den Kniehebel kurz verschwenkt und wiederum die bereits mehrfach erwähnte Rückschwenkung der Lenker 8 bzw. Schieber 10 erzeugt.

Die Bewegungssteuerung des Vorschubhebels 6 und seiner Lenker 8 mit den Schiebern 10 mittels des Vierfach-Achsen-Antriebs bestehend aus der Linearachse 11, der Rotationsachse 16, der Drehachsen 7.1, 7.2 und der Schwenkachse 17 der Lenker 8 wird im folgenden anhand der Fig. 1 bis 5 näher beschrieben.

In Fig. 1 ist die Vorschubeinrichtung 5 in ihrer Übernahmeposition gezeigt, in der einer 10.1 der Schieber 10.1, 10.2 von hinten an den Gutstapel 4 herangeführt ist und den Gutstapel 4 touchiert. Die Rotationsbewegung (Pfeil 41) des Vorschubhebels 6 ist dabei noch durch die rückläufige Linearbewegung (Pfeil 42) der Linearachse 11 überlagert, so dass in diese Übernahmeposition der Schieber 10.1 mit einer sehr geringen Geschwindigkeitskomponente in Richtung der Transportstrecke 2 von hinten an den Gutstapel 4 herangeführt wird.

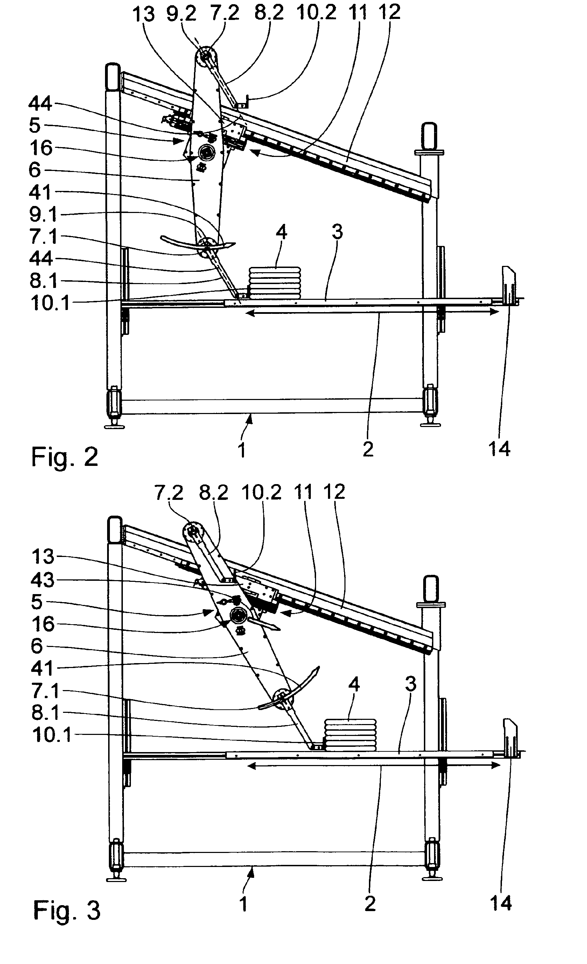

Fig. 2 zeigt den oberen Totpunkt der reversierenden Linearachse 11, nach dessen Durchlauf der Transporthub (Fig. 3) beginnt. Dazu wird unter fortwährender Rotationsbewegung 41 des Vorschubhebels 6 der Linearschlitten 13 an der Linearführung 12 schräg nach unten geführt (Linearbewegung 43), wodurch aufgrund der Annäherung des Linearschlittens 13 an die Transportstrecke 12 die Anhebbewegung des Schiebers 10.1 aufgrund des hochlaufenden Vorschubhebels 6 kompensiert wird. Insgesamt vollführt der Schieber 10.1 eine lineare Vorschubbewegung entlang der Transportstrecke 2. Aufgrund des anhand von Fig. 6 erläuterten Drehantriebes der Lenker 8.1, 8.2 verbleiben diese in einer konstanten Ausrichtung 44, wie sie in den Fig. 1 bis 5 strichliert angedeutet ist.

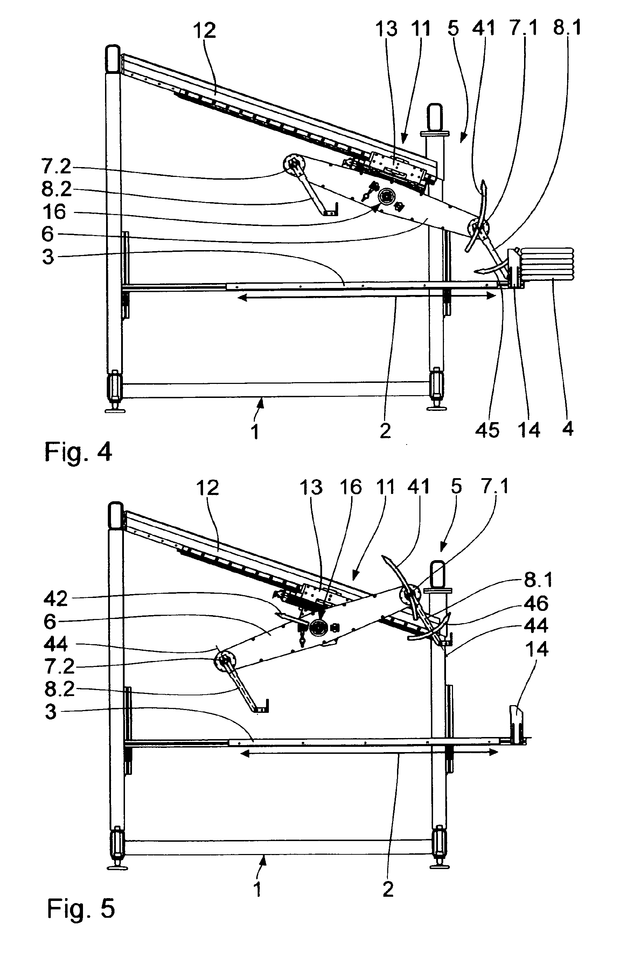

In Fig. 4 hat der Schieber 10.1 eine Ausgabeposition am Ende der Transportstrecke 2 erreicht. Während der Vorschubhebel 6 noch immer konstant umläuft, wird in diesem Moment das Zentralritzel 20 beispielsweise durch die Nockensteuerung mit Hilfe der Nockenscheibe 28 und des Steuernockens 29.1 kurz in eine gegen die Rotationsbewegung 41 laufende Schwenkbewegung versetzt, wodurch über den Zahnriemen 21 der Lenker 8.1 (wie auch der Lenker 8.2) zurückgeschwenkt (Pfeil 45 in Fig. 4) wird. Damit hebt der Schieber 10.1 vom Gutstapel 4 nach hinten ab und kann durch die weiterlaufende Rotationsbewegung 41 des Vorschubhebels 6 hinter dem Gutstapel 4 vorbei nach oben von der Transportstrecke weggeführt werden. Dabei wird das Zentralritzel 20 nach Ablauf des Steuernockens 29.1 wieder in die ursprüngliche stationäre Position zurückgedreht, so dass der Lenker 8.1 wieder in seine ursprüngliche Ausrichtung 44 vorgeschwenkt (Pfeil 46 in Fig. 5) wird. Durch eine Betätigung der Linearachse 11 in der rückläufigen Linearbewegung 42 wird schließlich bei fortlaufender Rotationsbewegung 41 des Vorschubhebels 6 der Rückhub des Schiebers 10.1 vorgenommen. Noch während dieses Rückhubes hat der andere Schieber 10.2 die in Fig. 1 Startposition erreicht, so dass der nächste Gutstapel mit Hilfe eines um 180° phasenversetzten Durchlaufes des vorstehend erörterten Zykluses mit Hilfe des anderen Schiebers 10.2 entlang der Transportstrecke 2 vorgeschoben werden kann. Währenddessen läuft dann der Schieber 10.1 wieder in die in Fig. 1 gezeigten Übernahmeposition und kann den übernächsten Gutstapel 4 transportieren.

Insgesamt werden während einer 360°-Rotation des Vorschubhebels 6 mit Hilfe der beiden Schieber 10.1, 10.2 zwei Gutstapel 4 taktweise entlang der Transportstrecke 2 verschoben. Dabei vollführt die Linearachse 11 einen zweimaligen reversierenden Durchlauf seiner Linearführung 12.

## Patentansprüche

1. Reversierende Vorschubeinrichtung zum taktweisen linearen Vorschieben von Gutstapeln über eine Transportstrecke (2), **gekennzeichnet durch**
- einen doppelarmigen, in einer zur Transportstrecke (2) parallelen Rotationsebene (R) rotierbaren Vorschubhebel (6), an dessen beiden Enden Schieber (10) jeweils über einen Lenker (8) in einer zur Rotationsebene (R) des Vorschubhebels (6) parallelen Ebene drehbar angetrieben gelagert sind, wobei die Schieber (10) jeweils abwechselnd mit einem Gutstapel (4) in Eingriff bringbar sind,
- eine Vierfach-Achsen-Anordnung zur Lagerung und zum gesteuerten, überlagerten Rotations-, Linear- und Drehantrieb des Vorschubhebels (6) und seiner Lenker (8) mit
= einer mit konstanter Winkelgeschwindigkeit rotativ angetriebenen, horizontal und quer zur Transportstrecke (2) außerhalb davon angeordneten Rotationsachse (16),
= einer reversierend linear angetriebenen, mit der Rotationsachse (16) gekoppelten Linearachse (11), die in einer zur Rotationsebene (R) parallelen Ebene in einem Winkel (W) auf das Ende der Transportstrecke (2) zu geneigt angeordnet ist,
= einer Drehachse (7) zum Drehantrieb der Lenker (8) relativ zum Vorschubhebel (6), und
= einer darin integrierten Rückschwenkachse (17) für die Lenker (8) der Schieber (10), sowie
- eine Bewegungssteuerung des Vorschubhebels (6) und seiner Lenker (8) mittels der Vierfach-Achsen-Anordnung derart, dass
= ausgehend von einer Übernahmeposition eines (10.1) der beiden Schieber (10.1, 10.2) in einem Transporthub unter Überlagerung einer Rotationsbewegung (41) der Rotationsachse (16), einer Linearbewegung (42, 43) der Linearachse (11) auf die Transportstrecke (2) zu und einer Drehbewegung des zugeordneten Lenkers (8) der Schieber (10) den Gutstapel (4) von der Übernahmeposition linear entlang der Transportstrecke (2) in Ausgabeposition des Gutstapels (4) am Ende der Transportstrecke (2) verschiebt,
= dort **durch** Aktivierung der Rückschwenkachse (17) bei Weiterdrehung des Vorschubhebels (6) dieser Schieber (10.1) **durch** eine begrenzte, reversierende Rückschwenkbewegung (45) des Lenkers (8) rückwärts vom Gutstapel (4) abgehoben und hinter diesem von der Transportstrecke weg geführt wird, und
= anschließend der Schieber (10.1) in einem Rückhub unter Überlagerung einer weiteren Rotationsbewegung (41) der Rotationsachse (16), einer rückführender Linearbewegung (42) der Linearachse (11) weg von der Transportstrecke (2) und einer weiterer Drehbewegung des Lenkers (8) auf der der Transportstrecke (2) abgewandten Seite der Rotationsachse (16) zurückgeführt und von hinten auf die Transportstrecke (2) zu wieder in die Übernahmeposition für den jeweils übernächsten Gutstapel eingeschwenkt wird, sowie
= der andere Schieber (10.2) den vorstehenden Zyklus um 180° phasenversetzt zum einen Schieber (10.1) unter Transport des jeweils nächsten Gutstapels vollführt.

2. Vorschubeinrichtung nach Anspruch 1, **dadurch gekennzeichnet, dass** die Linearachse (11) durch eine stationär zur Transportstrecke (2) angeordnete Linearführung (12) mit einem verschiebbar daran gelagerten Linearschlitten (13) gebildet ist.

3. Vorschubeinrichtung nach Anspruch 1 oder 2, **dadurch gekennzeichnet, dass** die Linearachse (11) durch einen Linearmotor gebildet ist.

4. Vorschubeinrichtung nach einem der vorgenannten Ansprüche, **dadurch gekennzeichnet, dass** die Rotationsachse (16) an der Linearachse (11) verschiebbar angeordnet ist.

5. Vorschubeinrichtung nach Anspruch 2 und 4, **dadurch gekennzeichnet, dass** die Rotationsachse (16) durch einen auf dem Linearschlitten (13) sitzenden Rotationsantrieb (15) gebildet ist.

6. Vorschubeinrichtung nach einem der vorgenannten Ansprüche, **dadurch gekennzeichnet, dass** der Drehantrieb der Drehachsen (7) der Lenker (8) von der Rotationsachse (16) abgeleitet ist.

7. Vorschubeinrichtung nach Anspruch 6, **dadurch gekennzeichnet, dass** die Drehachsen (7) der Lenker (8) über einen umlaufenden Ketten- oder Zahnriementrieb (21) an ein während des Transport- und Rückhubes gegenüber der Rotationsachse (16) stillstehendes, koaxiales Zentralritzel (20) angekoppelt sind.

8. Vorschubeinrichtung nach Anspruch 7, **dadurch gekennzeichnet, dass** zur Erzeugung der Rückschwenkbewegung der Lenker (8) das Zentralritzel (20) schwenkbar gelagert und reversierend antreibbar ist.

9. Vorschubeinrichtung nach Anspruch 8, **dadurch gekennzeichnet, dass** das Zentralritzel (20) über eine Nockensteuerung (28, 29, 30, 31) vom rotierenden Vorschubhebel (6) oder von der Linearachse (19) reversierend betätigbar ist.

10. Vorschubeinrichtung nach Anspruch 8, **dadurch gekennzeichnet, dass** das Zentralritzel (20) von einem gesonderten Servomotor (39) reversierend betätigbar ist.

11. Vorschubeinrichtung nach Anspruch 8, **dadurch gekennzeichnet, dass** das Zentralritzel (20) von einem Pneumatikantrieb betätigbar ist.
